# EUROPEAN PATENT APPLICATION

(11) **EP 2 581 866 A1**
(43) Date of publication of application: **17.04.2013**
(21) Application number: 12187957.1
(22) Date of filing: 10.10.2012
(51) Int. Cl.: G06Q 10/10, G06Q 30/02

(54) **Computing system method for advertising a future ad**

(30) Priority: 13.10.2011 US 201161546976 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

The embodiments of the invention provide a computer implemented method of advertising an ad including data content or metadata associated with a time in the future to a plurality of users connected via computer network to a server, comprising the steps of: (a) receiving data including the ad content at a user's interface of at least one of the plurality of users from the server via the network; (b) placing the ad content on a timeline of the user's interface; and (c) displaying the ad content on the timeline in relation to its associated time and the current time. Moreover, the invention provides a computer program product to perform such a method.

## Description

### Field

The present invention relates to a computer-implemented method for advertising an ad to a plurality of users and to a computer system for performing such a method. The ad may comprise an advertisement and/or a deal which includes time-related data content or at least time-related metadata. The advertisement or the deal may refer to an event taking place at a certain point in time or over a span of time in the future.

### Background

Advertising of new products or any other events via a computer network is commonly known. In particular, online social networks or other environments on a computer network provide the function where a user, including agencies and companies in general, can distribute a message including advertisement, messages, or other deals (collectively called "ad"). The ads are presented in a line usually starting with the latest ad and ending with the oldest ad. Thus, a user reading the ads will usually start reading the latest at the beginning and scroll down to the other ads.

For a user or advertiser or any other company who would like to advertise an event in the future, i.e., to publish an ad associated with a time in the future, the current system has the disadvantage that, when the event comes closer in time, the ad appears further down in the list such that a user who usually reads the ads from the beginning of the list, will lose track of the ad.

US 2005/0197894 A1 discloses a localized event server apparatus having a central database of events, advertisements and the like. Interfaces exist for consumers, advertisers, and event promoters and others who may benefit from the available event information. The advertisement surrounds an event calendar configured in real time according to arbitrary filtering and sorting selections made by the user. The user may merely define times and geographical locations of potential advertising targets.

US 2008/0046311 A1 discloses a computing system for monetizing calendar applications. A calendar interface is presented accessible via a network. Advertised events displayed along the side of the user's calendar interface may be added to the calendar by the user's interaction.

There is a continuous need for a multi-user computer system, in particular online social community network, providing a more intuitive presentation of ad contents associated with events or deals in the future.

### Brief Summary

A first aspect of the present invention provides a computer-implemented method of advertising an ad including data content or metadata associated with a time in the future to a plurality of users connected via computer network to a server, comprising the steps of:
(a) receiving data including the ad content at a user's interface of at least one of the plurality of users from the server via the network;
(b) placing the ad content on a timeline of the user's interface; and
(c) displaying the ad content on the timeline in relation to its associated time and the current time.

The ad, which can be an advertisement, a deal or any other notice to an event associated with a point in time or a span of time in the future, is placed on a timeline, e.g., a calendar. It is comparable to look like a reminder placed in a timeline to a calendar to direct the attention of the user of the software to the event in the future. If, e.g., a company releases a new movie, it places the date of the premier on the timeline of the movie fans of an online community or social network. Due to placing the ad content on a timeline and displaying it on the timeline in relation to the associated time and the current time, it can be easily seen how far the event is in the future, and it reflects the dynamic nature of the event that comes closer by the day and even the daytime. The urgency of such a representation is more tangible than just displaying the date.

According to a preferred embodiment, in the step of placing the ad content on the timeline, the user's interface is a user's interface of an online community or a social network. In such an online community or social network, it is possible to address a particular user or user groups interested in the content of the ad.

According to a preferred embodiment, in the step of displaying the ad content, the timeline is an online calendar. In an alternative embodiment, the timeline can be a simple thread showing the entries in the order as entered by a user. The ads associated with a time in the future ad place above the list of ads without a time relation and display as a current ad as soon as the specified time is the current time. In an online calendar, the ad can be immediately placed on the specified date and daytime in the calendar. In an alternative embodiment, the ads are shown in a timeline but each ad is marked by the calendar date and preferably by the time of the date.

In accordance with a preferred embodiment, the ad content changes over time based on at least one of receiving data from the server and a user input at the user's interface, and the method further comprises in the step of displaying the ad content, updating the display of the ad content in accordance with the changes of the ad content. The ad can change over time, e.g., due to social impact and user interaction. Moreover, the company responsible for the ad content may wish to update the ad content due to recent developments, e.g., if an event was canceled, the company, advertising the event, will indicate in the ad that the event has been canceled.

According to a preferred embodiment, the method further comprises the steps of
(d) interacting with an ad by at least one user via the user's interface; and
(e) transmitting data relating to the ad content from the user's interface to the server.

This embodiment allows for updating the ad content by a user as mentioned in the previous embodiments. Moreover, it is preferred that in step (e) the data relating to the add content includes a time stamp when the at least one user interacted with the ad. Thus, ad agencies can retrieve precise data from the interaction with the placed ad. The interaction around the advertisement creates a history of interactions as it is always possible to see when certain interactions happened, e.g., instead of having one value that defines how many users interacted with the ad (or it is necessary to start a poll every time you want to collect data for a certain time), each interaction is registered with its time resulting in a cloud of data that is much more precise for any data mining (which can happen anytime).

According to a preferred embodiment, the associated time is a certain point in time, e.g., a fixed date and daytime of a particular event. Moreover, the associated time may also cover a span of time such as a duration of time at which a festival takes place, a special offer is available, etc. In this embodiment, the ad content may be displayed continuously as a still-valid ad of the day when the current time is in the defined span of time.

According to a further aspect of the present disclosure, provided herewith is a computer program product comprising a computer-readable medium with computer-executable instructions that, when executed on the computer, cause the computer to perform the method of any of the preceding embodiments.

According to a further aspect of the present disclosure, provided herewith is a server configured to perform a method as described above.

Further embodiments and benefits are specified in the following description in connection with the accompanying drawings.

### Brief description of the drawings

- Figure 1: shows a possible implementation and visualization of future ads of a user's interface in accordance with a first embodiment; and
- Figure 2: shows a further embodiment of a user's interface including a calendar function.

### Detailed Description

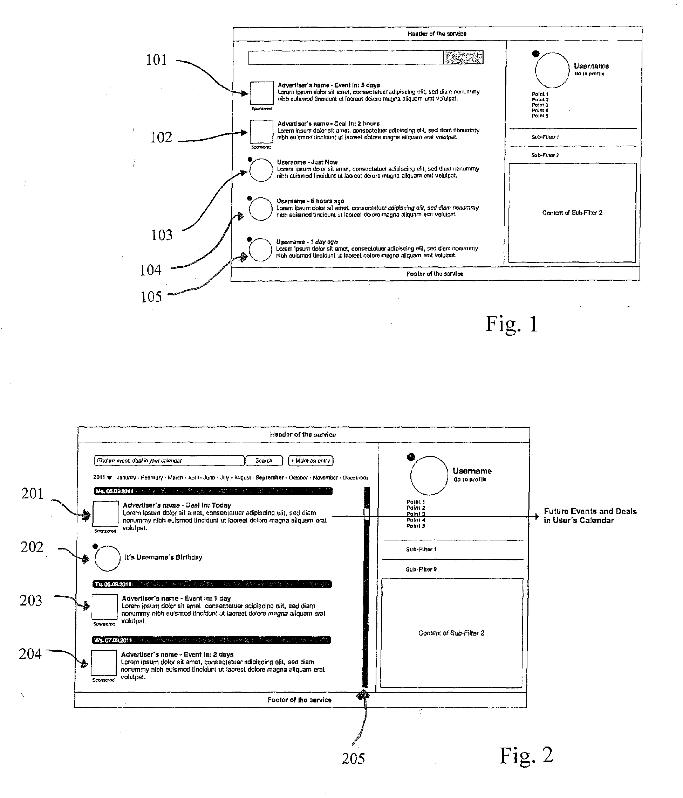

Figure 1 depicts a view of the user's interface of an online social network. On the left part of the display, a list of ads is displayed. The sorting usually starts with the latest (i.e. the item the farthest in the future) and ends with the oldest ad. Ad 101 shows a sponsored future ad, that is due in five days. This ad is displayed at the beginning of a timeline as is the ad farthest in the future. The user can click on an icon to interact with the ad. The ad 102 is a future ad that is due in two hours and thus sorted below ad 101. Ad 103 shows a normal text message that was already sent by another connected user without specifying a particular time. Thus, it is shown as a current ad which is valid at the current time.

The ad 101 may, e.g., refer to a future event such as a provider asks a user to guess the future success of the product, to guess the timing of a feature event, to participate in the future product design, and/or to guess the future audience. The user can add the event to his personal calendar and set up a reminder.

The future event 102 may refer to a future deal such as a provider enables a user to pre-order a future deal immediately. The user may add this event to his personal calendar and set up as a reminder.

Moreover, ads 104 and 105 refer to a time which has already passed. These adds are shown in the timeline as historical ads.

Figure 2 shows a further embodiment of the user's interface which already implements a calendar function in the timeline. Each ad 201, 203, and 204 is provided with a top bar showing a calendar entry referring to the date and optionally to the daytime associated with the ad content. The ad 202 is a user's text message carrying no particular associated time.

Figure 2 shows all ads in the calendar view. The calendar sorts ads starting with the oldest ones and sorts downward, showing the most in the future positioned ad at the bottom. Moreover, the user's interface include a scroll bar 205 allowing the user to scroll in the timeline or calendar.

The following examples illustrate how to use the future ads in an online community or social network including at least one server and at least two clients each including a user interface as described above.

### Guessing the future success of a product

A film company starts an advertisement about two months before a certain film starts. The advertisement is targeted towards film fans that are active in an online community. Content of the ad is the question, how many people will watch the movie during the first week. This question, along with a visual cue like the movie poster, is spread as an advertisement.

The users who get the advertisement are now able to read the advertisement and guess the correct answer as a multiple choice selection of possible answers. To motivate users into actually trying to guess right and not just clicking a random answer (or deliberately clicking the wrong answer), people who guess right are able to win something, e.g., they earn virtual currency used in the online community for participating, they earn substantially more currency for guessing the right answer, and, finally, they are able to win a "real" prize like tickets to actually see the movie for free.

As the social aspect is important for the online community, the participants can also compare their performance not only of one, but of all guesses made at this advertisement and the guessing skill in general. Every guess they make is saved persistently in the online community network, connected to the profile of the said user.

### Guessing the timing of a future event

A company starts an advertisement before a certain product is launched. The advertisement is targeted toward fans of the product that are active in an online community. Content of the ad is the question, when the product will be launched. This question is spread as an advertisement.

The users who are targeted by the advertisement are now able to read the advertisement and guess the correct answer as a multiple choice selection of possible answers. To motivate users into actually trying to guess right and not just clicking a random answer (or deliberately clicking the wrong answer), people who guess right are able to win something. First they earn virtual currency used in the online community for participating, they earn substantially more currency for guessing the right answer, and, finally, they are able to win a "real" prize like a reduction in price for the final product.

As the social aspect is important for the online community, the participants can also compare their performance not only of one, but of all guesses made at this advertisement. A comparison with other users is also possible.

### Participating in the future product design (e.g. name, color, look, and feel)

A company is interested in finding the correct product design for an upcoming product before it is launched. Content of the ad is the question how a product should look when it is launched. This question is spread as an advertisement.

The advertiser wants to see which product design the participants prefer and how to change the product more toward a desirable product the audience would purchase. With this method, the advertiser is able to respond to the requirements before the product is actually launched.

The users that get the advertisement are now able to read the advertisement and select a choice from a multiple selection of possible answers, e.g., designs. Additionally they are able to express their thoughts on how the product should look.

While the product company might have already decided on one design, this advertisement is useful to test if the planned design is actually the preferred one and how high it ranks among the choices, and, simultaneously, the audience gives an answer to the question, what design (instead of the planned one) they would prefer.

To motivate users into trying to guess right and not just clicking a random answer (or deliberately clicking the wrong answer), people who guess right are able to win something. They earn virtual currency used in the online community for participating. They earn substantially more currency for guessing the right answer, and, finally, they are able to win a "real" prize like reduction in price for the final product.

As the social aspect is important for the online community the participants can also compare their performance not only of one, but of all guesses made at this advertisement and to other users.

### Guessing the future audience

A company is interested in finding the correct consumers and potential new consumers of a new product before it is launched. Therefore, the new product is promoted by a campaign. Content of the ad is, on the one hand, the promotion of the upcoming product. On the other hand, it allows recipients to guess who could be interested. This question is spread as an advertisement.

The guessing of the audience is executed in two ways. One way is that users who are targeted to the advertisement read the advertisement and guess the correct answer as a multiple choice selection of possible answers. The second way is they can guess if a friend might be interested in it. This method allows the indication if someone likes or dislikes something. The system notifies the mentioned user (i.e., the friend) about the guess of someone directly and asks if they are really interested in it or not. Once a user confirms that he is interested or not he becomes a newly detected customer. Additionally, the system pushes time by time the new product to linked persons to figure out if they react to it or not. Based on the detection system it is possible to add users to the list of potential customers.

It is to be understood that many modifications may be provided to the exemplifying embodiments of the method or program product without leaving the scope of the invention. Consequently, the invention may be practiced within the scope of the claims differently from the examples described. Also, the described features and characteristics of the invention may be of importance for the invention in any combination.

## Claims

1. A computer-implemented method of advertising an ad including data content or metadata associated with a time in the future to a plurality of users connected via computer network to a server, comprising the steps of:
(a) receiving data including the ad content at a user's interface of at least one of the plurality of users from the server via the network;
(b) placing the ad content on a timeline of the user's interface; and
(c) displaying the ad content on the timeline in relation to its associated time and the current time.

2. The method of claim 1, wherein in step (b) of placing the ad content on the timeline, the user's interface is a user's interface of an online community or social network.

3. The method of any of the preceding claims, wherein in step (c) of displaying the ad content, the timeline is an online calendar.

4. The method of any of the preceding claims, wherein the ad content changes over time based on at least one of receiving data from the server and user input at the user's interface and the method comprising in step (c) updating the display of the ad content.

5. The method of claim 1, further comprising the steps of:
(d) interacting with the ad by the at least one user via the user's interface and;
(e) transmitting data relating to the ad content from the user interface to the server.

6. The method of any of the preceding claims, wherein in step (e) the data relating to the ad content includes a time stamp when the at least one user interacted with the ad.

7. The method of any of the preceding claims, wherein the associated time is a persistent point in time.

8. The method of any of the preceding claims, wherein the associated time covers a span of time.

9. A computer program product including a computer-readable medium with computer-executable instructions that, when executed on a computer, cause the computer to perform the method of any of the preceding claims.

10. A server, configured to perform a method of one of the claims 1 to 8.
